# EUROPEAN PATENT APPLICATION

(11) **EP 1 587 314 A2**
(43) Date of publication of application: **19.10.2005**
(21) Application number: 05102694.6
(22) Date of filing: 06.04.2005
(51) Int. Cl.: H04N 5/445

(54) **Content-progress indicator for an EPG**

(30) Priority: 15.04.2004 US 825859
(71) Applicant: MICROSOFT CORPORATION, Redmond, WA 98052 (US)
(72) Inventor: Sloo, David H., 98052, Redmond (US); Okabe, Keith K., 98052, Redmond (US); Morris, Ronald A., 98052, Redmond (US)
(74) Representative: Grünecker, Kinkeldey, Stockmair & Schwanhäusser Anwaltssozietät

(57) **Abstract**

A content-progress indicator for an EPG is described. In an implementation, a user interface (UI) for output by a client and for display by a display device includes a plurality of representation of content items and at least one pictorial representation. Each representation of a content item is selectable by a user to navigate to a corresponding content item. Each content item has a duration when streamed for output by the client. The at least one pictorial representation corresponds to a respective content item and indicates a time remaining in the duration of the respective content item.

## Description

### TECHNICAL FIELD

The present invention generally relates to electronic program guides and more particularly to a content-progress indicator for an EPG.

### BACKGROUND

Viewers have access to an ever-increasing amount of television programming due to a growing variety of television programs and an increasing number of channels. Although the amount of television programming has increased, however, viewers may encounter difficulties in accessing desired television programs due to the quantity of available content.

An electronic program guide (EPG) may be supplied to improve the viewer's experience with television programs. The EPG may enable the viewer to observe a listing of television programs that are currently being streamed, as well as a listing of television programs that will be streamed in the future. Additionally, the EPG may allow the viewer to navigate to a television program from the EPG itself To provide additional information to the viewer, the EPG may include one or more television program characteristics that describe a television program in the EPG. The television program characteristics may include title, start time, channel, duration, description of the television program, a rating for the television program (e.g., G, PG, PG13, R, etc.), the principle protagonist, and so on. Because of the quantity of additional information, however, the viewer may not be able to readily determine desired information about the content.

Therefore, there is a continuing need to improve an EPG for display of data to a viewer.

### SUMMARY

A content-progress indicator for an EPG is described. The content-progress indicator may be included in a display of an EPG to indicate a current progress state of content that is available for output by a client, such as a set-top box. For example, the content-progress indicator may indicate the current progress state of content that is streamed by a content provider for output and/or recordation by the client. The content-progress indicator may indicate the current progress state through a pictorial representation that indicates elapsed time and time remaining relative to duration of a stream of the content.

In an implementation, a method includes generating an electronic program guide (EPG) from data describing a plurality of content items for streaming from a head end to a client. The EPG includes a display of a described content item and a pictorial representation of a current progress state in the streaming of each content item from the head end.

In an implementation, a user interface (UI) for output by a client and for display by a display device includes a plurality of representation of content items and at least one pictorial representation. Each representation of a content item is selectable by a user to navigate to a corresponding content item. Each content item has a duration when streamed for output by the client. The at least one pictorial representation corresponds to a respective content item and indicates a time remaining in the duration of the respective content item.

In an additional implementation, a client includes an input interface for receiving one or more of a plurality of content items, an output interface for providing an output to a display device, a processor, and memory. The memory is configured to maintain an EPG for output at the output interface. The EPG includes at least one content-progress indicator that corresponds to a respective one of the content items. Each content item has a duration when streamed for output at the output interface. The content-progress indicator is displayable as a pictorial representation indicating elapsed time and time remaining in the stream of the respective content item relative to duration of the stream of the respective content item.

### BRIEF DESCRIPTION OF THE DRAWINGS

FIG. 1 is an illustration showing a television entertainment system that includes a publisher and a client.

FIG. 2 is an illustration of an exemplary implementation showing the client and an EPG server of FIG. 1 in greater detail.

FIG. 3 is an illustration of an exemplary display of an EPG generated from EPG data through execution of an EPG application by the client.

FIG. 4 is an illustration of a system in an exemplary implementation showing an EPG generated from EPG data which includes a plurality of content-progress indicators that describes receipt and recordation of content by the client.

FIG. 5 is an illustration of a system in an exemplary implementation showing an EPG generated from EPG data which includes a plurality of content-progress indicators that describes output of recorded content at the client.

FIG. 6 is a flow chart depicting a procedure in an exemplary implementation in which an EPG that describes a plurality of content items is generated by an EPG server and communicated to a client, the EPG includes a content-progress indicator for each content item.

FIG. 7 illustrates an exemplary television entertainment system that is an architecture in which generation of an EPG may be implemented.

FIG. 8 illustrates selected components of the television entertainment system of FIG. 7, such as an exemplary client and a television.

The same reference numbers are utilized in instances in the discussion to reference like structures and components.

### DETAILED DESCRIPTION

### Overview

A content-progress indicator for an EPG is described. The content-progress indicator may be included in a display of an EPG to indicate a current progress state of content that is available for output. For example, the content-progress indicator may indicate the current progress state through display of a bar that indicates elapsed time and time remaining relative to duration of a stream of content. Thus, a viewer of the content-progress indicator may visually associate a relative progress state in the streaming of particular content items without engaging in "mental mathematics" in order to compute the state as previously required when viewing textual descriptions of duration, elapsed time, and so forth.

EPG data may be provided in television entertainment systems, such as interactive television networks, cable networks that utilize EPGs, and Web-enabled television networks. Clients in such systems range from full resource clients with substantial memory and processor resources (e.g., television enabled personal computers, television recorders equipped with hard disk) to low-resource clients with limited memory and/or processing resources (e.g., traditional set-top boxes). While aspects of the system and methods described below may be used in any of these systems and for any type of client, they are particularly well suited for systems with low-resource clients. Hence, portions of the following discussion describe the clients, EPG servers, and methods in the context of a low-resource environment. For example, display of the content-progress indicator may be beneficial on clients having display devices with limited resolutions in which a textual description of a current progress state would consume an overly large portion of the display and/or could not be displayed in a satisfactory manner.

In the following discussion, content items are described to reference particular portions of content that is streamed by a head end and/or output by a client, such as output from a recordation stored locally on the client. Content items may take a variety of forms, such as a television program, a movie, a trailer for the movie, video-on-demand, a portion of a broadcast (e.g., a segment in a news channel broadcast), a scene in a television program, and so forth. Thus, content items may be utilized to reference particular "parts" of content that is available for output by a client, and are not limited to "complete" content items, such as a television program, a movie, and so on.

### Television Entertainment System

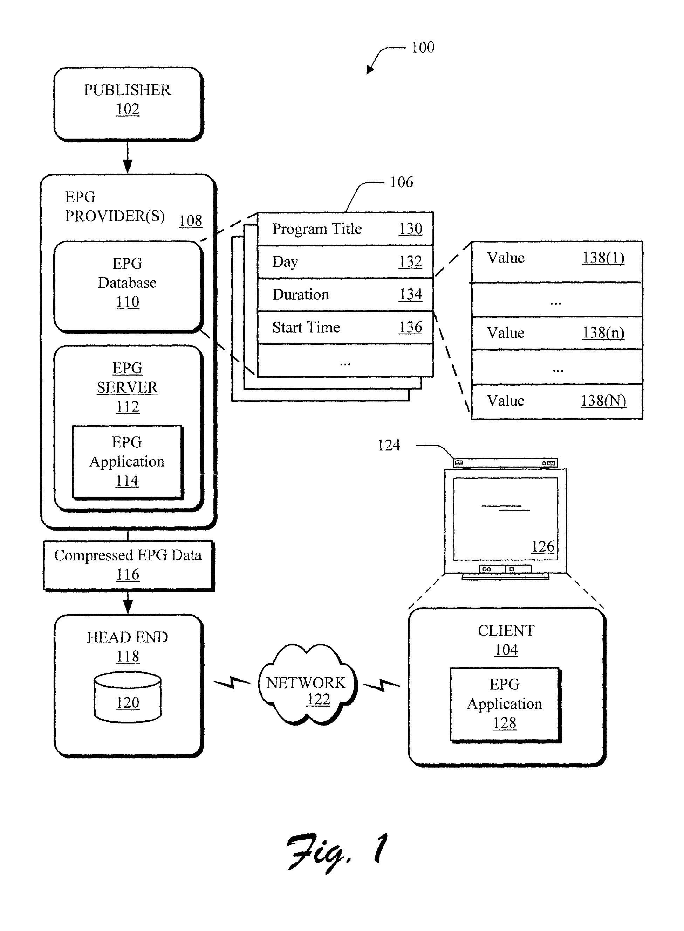

FIG. 1 is an illustration showing a television entertainment system 100 that includes a publisher 102 and a client 104. The publisher 102 creates EPG data 106 for distribution to the client 104. One example of a publisher 102 is Tribune Media Services of Chicago, Illinois, which generates EPG data for interactive television networks. As used herein, EPG data refers to a type of data that might be used to construct an EPG. EPG data includes television program characteristics (characteristics) of television programs streamed by a content provider. The characteristics may include program titles, ratings, description, lead protagonist's name, year made, station call letters, time schedules, channel numbers, and so on. Each of the characteristics has a corresponding value, such as "Everybody Loves Raymond" for the characteristic "program title."

The EPG data 106 is transferred as an electronic file from the publisher 102 to an EPG provider 108. As one example, the EPG data 106 is transferred using a file transfer protocol (FTP) over a TCP/IP network (e.g., Internet, Intranet, and so on) to the EPG provider 108. The EPG data 106 is stored in an EPG database 110 at the EPG provider 108.

The original version of the EPG data 106 contains all of the programming information for multiple days. An EPG server 112 resides at the EPG provider 108 to process the EPG data 106. The EPG server 112 processes the EPG data 106 by executing an EPG application 114. The processing involves one or more techniques to condition the EPG data 106 so that the client 104 may handle the EPG data 106 more effectively. For example, the client 104 may be configured as a low-resource client that is typically characterized as having limited memory and/or processing resources. Such a client 104 may not be able to store the entire original version of the EPG data 106. With limited resources at the client 104, the processes performed by executing the EPG application 114 by the EPG server 112 are helpful to precondition the EPG data 106 into a more suitable form for storage and processing at the client 104.

Among other processes, the EPG server 112, when executing the EPG application 114, is configured to reduce the amount of EPG data 106 so that it can be stored at the client 104 even if the client 104 has limited resources. For example, the EPG server 112 may compress the EPG data 106 prior to its distribution by using the EPG application 114. The EPG application 114 may be implemented as software that is used to compress the EPG data 106 for communication to the client 104.

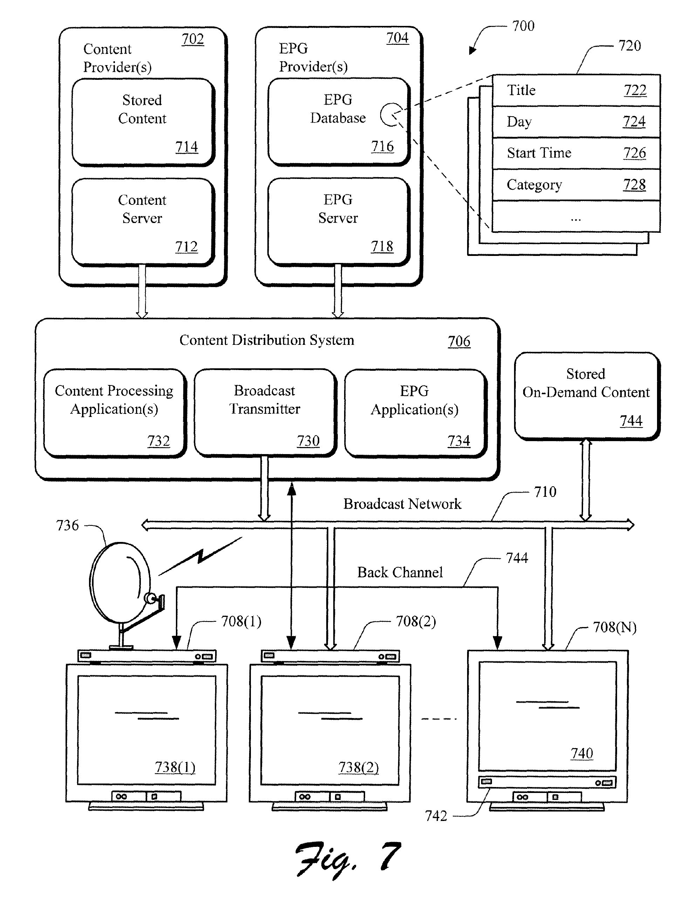

The EPG server 112 provides compressed EPG data 116 formed from the EPG data 106 to a head end 118 for storage in a database 120 of the head end 118. Distribution from the head end 118 to the client 104 may be accommodated in a number of ways over a network 122, including cable, RF, microwave, and satellite. For example, the network 122 may be configured as the Internet as illustrated in FIG. 1. In another implementation, the network 122 may be configured as a broadcast network, further discussion of which may be found in relation to FIG. 7. Although the head end 118 is illustrated as separate from the EPG provider 108, the EPG provider 108 may also include the head end 118 and the EPG server 112. Additionally, the EPG server 112 may be included as part of the publisher 102 that provides the EPG data 106.

In the illustrated implementation, the client 104 is implemented as a set-top box 124 connected to a display device 126. The client 104 is often equipped with sufficient processing and storage capabilities to store and run an operating system and a few programs. Examples of programs stored on the client 104 might include a Web browser, a personal scheduler, and so forth. Although the set-top box 124 is shown separately from the display device 126, they may alternatively be built into the display device 126 as integral units, as described in relation to FIG. 7. Furthermore, in other implementations, the client 104 may be embodied as other devices capable of handling EPG data, such as a broadcast-enabled computer, an information appliance, or the like.

The client 104 may include an EPG application 128 that is used to interact with compressed EPG data 116 obtained from the EPG server 112. For example, the EPG application 128 may be used to decompress the compressed EPG data 116 to construct an EPG, and so forth.

EPG data 106 stored at the EPG database 110 may include a variety of characteristics 130-136 that describe television programs. For example, the characteristics may include program title 130, day 132 the television program is to be streamed (i.e. Sunday), duration 134 of the stream of the television program, start time 136 the television program, and so forth. Additionally, each of the characteristics 130-136 may have a plurality of values. For instance, television programs that are streamed by a content provider may have different values 138(1),...,138(n),...138(N) for the duration 136 characteristic.

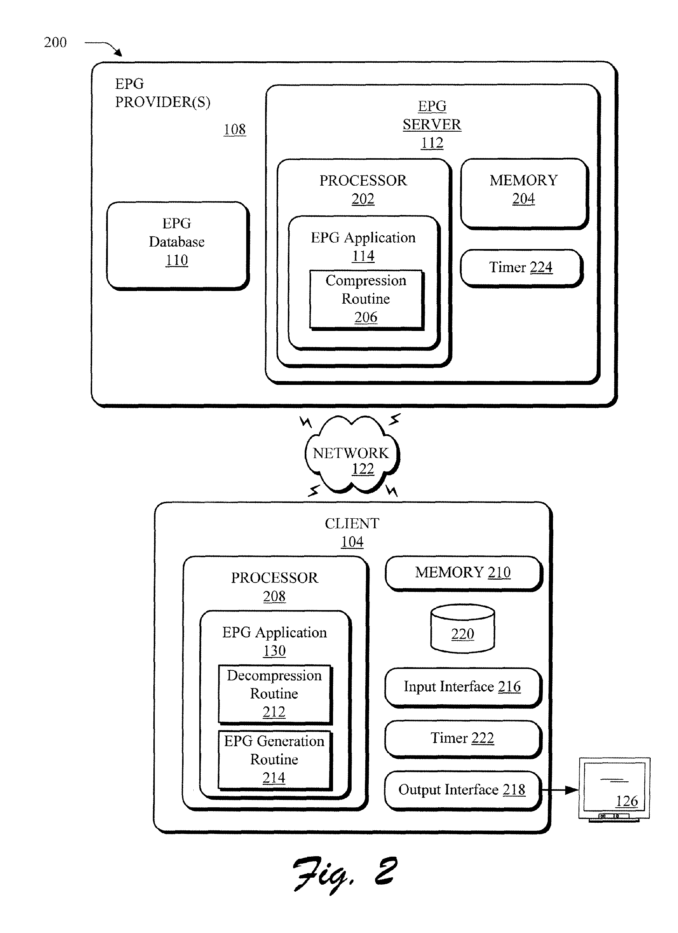

FIG. 2 is an illustration of an exemplary implementation 200 showing the client 104 and the EPG server 112 of FIG. 1 in greater detail. The EPG provider 108 includes the EPG server 112 and the EPG database 110. The EPG server 112 includes a processor 202 and a memory 204. The EPG application 114 is illustrated as being executed on the processor 202 and is storable in the memory 204. The EPG application 114 may include a compression routine 206 to compress the EPG data 106 of FIG. 1 to form compressed EPG data for communication to the client 104.

The client 104 includes a processor 208 and a memory 210. The EPG application 130 is storable in the memory 210 and is illustrated as being executed on the processor 208. The EPG application 130 may include a decompression routine 212 that, when executed, decompresses compressed EPG data received from the EPG server 112. The EPG application 130 may also include an EPG generation routine 214 that, when executed, is used to construct an EPG from EPG data received from the EPG provider 108 over the network 122.

The client 104 further includes input and output interfaces 216, 218. The input interface 216 may be utilized to obtain data from over the network 122, such as EPG data, content, and so forth. The output interface 218 may be utilized by the client 104 to provide an output for display on the display device 126, such as content and/or an EPG generated from EPG data by the EPG application 130.

The client 104 may also include digital video recorder (DVR) functionality. For instance, the client 104 may include a storage device 220 to record content received from the network 122 via the input interface 216 for output to and rendering by the display device 126. The storage device 220 may be configured in a variety of ways, such as a hard disk drive, a removable computer-readable medium (e.g., a writable digital video disc), and so on. Although the storage device 220 is illustrated as separate from the memory 210, the memory 210 and the storage device 220 may be combined. For example, the storage device 220 may be configured as a hard disk drive and the memory 210 may be configured as RAM, both the memory 210 and the storage device 220 may be configured as RAM, one or both of the memory 210 and the storage device 220 may be configured as removable memory, and so forth.

The client 104 also includes a timer 222. Although the timer 222 is illustrated as separate from the processor 208 and memory 210, the timer 222 may be implemented in software, hardware, or a combination thereof. The client 104 may query the timer 222 to determine a current time. The client 104 may also determine the current time from a time indicated by a timer 224 on the EPG server 112. For example, the EPG server 112 may include periodic notifications of the current time based on the timer 224 that are communicated to the client 104 over the network 122. In another example, the periodic notifications of the current time are broadcast in a signal from a head end.

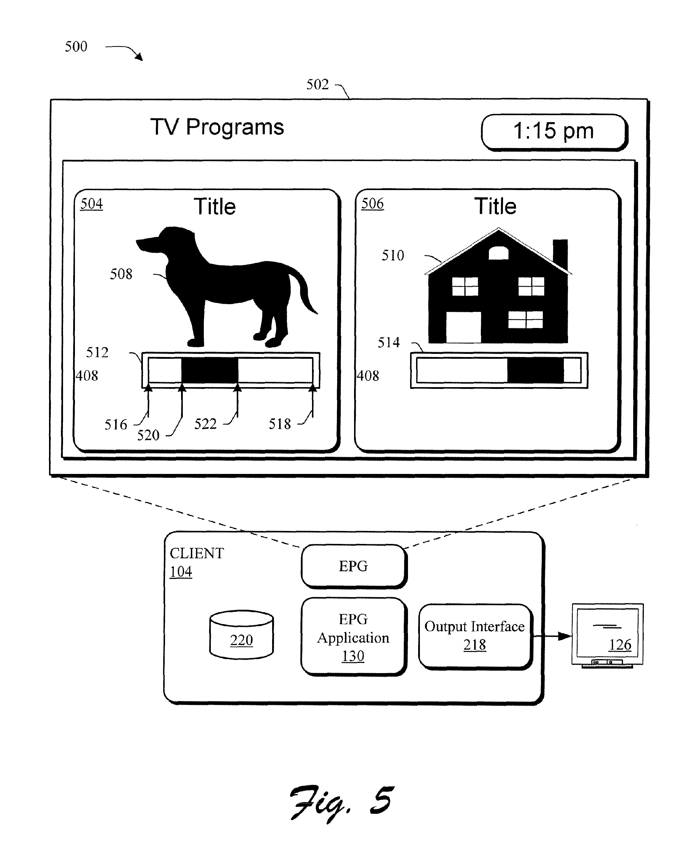

The EPG application 130, when executed, may execute the EPG generation routine 214 to generate an EPG from the EPG data in a variety of ways. As previously described, the EPG data (e.g., EPG data 106 of FIG. 1) may include a variety of characteristics that describe content for output by the client 104. The EPG generation routine 214 may format these characteristics into an EPG such that a viewer of the EPG may view relevant information regarding the content. For example, the EPG may include a content-progress indicator for one or more content items described in the EPG to pictorially represent the progress of an output of each such described content item. Additional discussion of generation of an EPG including content-progress indicators may be found in relation to FIG. 5. Further discussion of the client 104 and the EPG provider 108 and EPG server 112 may be found in relation of FIGS. 7-8.

Although the environment 100 of FIG. 1 and the system 200 of FIG. 2 were described as providing compressed EPG data 116 for use by the EPG application 130 to generate the EPG, the EPG may be generated in a variety of ways. For example, the EPG application 114 may be executed by the EPG server 112 to generate the EPG for communication to the client 104 over the network 122.

### Exemplary EPGs

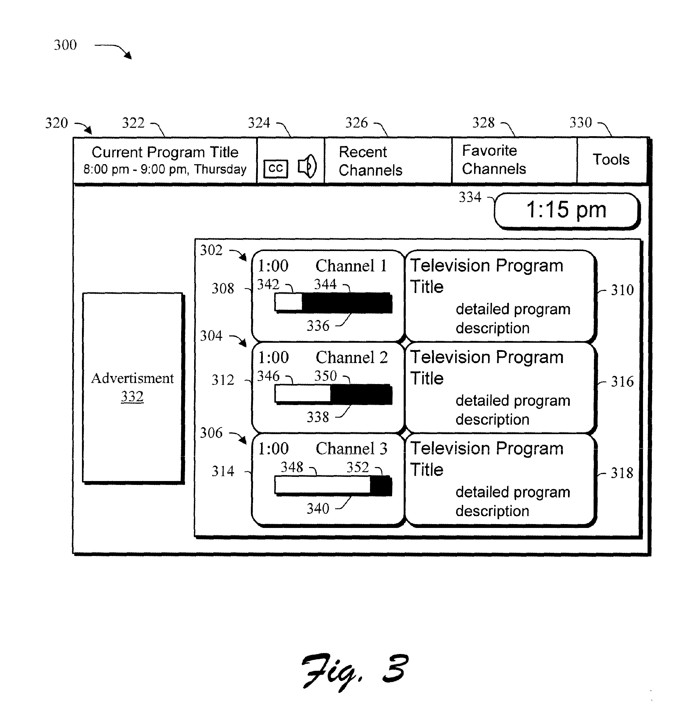

FIG. 3 is an illustration of an exemplary display of an EPG 300 generated from EPG data through execution of the EPG application 130 of FIG. 2 by the client 104. The EPG 300 utilizes a plurality of representations to describe content, which in this example is content that includes a plurality of television programs that are available for streaming from content providers. The EPG 300 may be output by the client 104 of FIG. 2 for rendering by the display device 126 such that a viewer views the EPG 300 that describes content that may be available for output by the client 104.

The EPG 300, for instance, may describe a plurality of channels 302-306 that provide respective television programs. Each of the channels 302-306 described by the EPG 300 includes additional information that describes television programs for streaming on the respective channels 302-306. For example, channel 302 in the EPG includes a segment 308 which displays a start time for the television program (which is illustrated as "1:00") and the channel from which the television program is streamed (which is illustrated in segment 308 as "Channel One"). Channel 302 also includes a segment 310 which contains additional descriptive information relating to the television program, such as the television program title and a detailed textual description of the television program. Likewise, channels 304-306 include respective segments 312, 314 which describe the start time and channels. Channels 304-306 also include respective segments 316, 318 which include the title and detailed textual descriptions of respective television programs. Although title, start-time, and detailed textual descriptions have been described as examples of characteristics that may be utilized to describe content, a variety of characteristics may be included in an EPG. Such examples include a title, a story line, a description, a production credit, a critic's opinion, a review, a recommendation, a duration, a start time, a stop time, an elapsed time in the streaming of the content, a time remaining in the streaming of the content, a genre, a rating, a performer, a director, and any combination thereof.

The EPG 300 may also include a variety of other functionality. For example, the EPG 300 is illustrated as including a menu bar 320 to enable a user to navigate between functionality utilizing one or more of the input devices. The illustrated menu bar 320 has functionality including current program title 322, audio functionality 324 such as closed captioning and stereo, recent channels 326, favorite channels 328, and tools 330, such as options for arrangement, font selection, and so on. The EPG 300 may also include one or more advertisements 332 and a display of the current time 334 obtained from the timer 222 on the client 104 as shown in FIG. 2, the timer 224 on the EPG server 112 of FIG. 2, and so on.

The EPG 300, when generated, provides a user interface (UI) that is configured to receive user inputs. For instance, a viewer may utilize an input device, such as a television remote control, to select one or more of the representations of the television program (e.g., portions 308-318) on the EPG 300 to navigate to corresponding content. Thus, the viewer may view descriptive information to chose a television program and navigate to a chosen program by utilizing the EPG 300. Content described by the EPG 300, however, may have different durations, start times, and stop times. For example, television programs streamed on respective channels 302-306 are illustrated as starting at "1:00". Each television program, however, may have a different duration, e.g. a different amount of time taken when streamed by respect content providers. For instance, the television program corresponding to channel 302 has a one-hour duration, the television program corresponding to channel 304 has a half-hour duration, and the television program corresponding to channel 306 has a twenty-minute duration. As shown in the display of the current time 334, fifteen minutes have elapsed since the start time of each of the television programs. Therefore, each television program is at different relative point in the streaming of the respective television program. For instance, one-quarter of the streaming of television program on channel 302 has elapsed, while one-half of the streaming of the television program on channel 304 has elapsed, and three-quarters of the streaming of the television program on channel 306 have elapsed.

To display the relative amounts of time that have elapsed and that remains in the streaming of the television programs, each of the channels 302-306 may include a respective content-progress indicator 336-340. Each content-progress indicator 336-340 of FIG. 3 supplies a pictorial representation of the elapsed time and the time remaining relative to the duration of a respective stream of a television program. For example, content-progress indicator 336 is illustrated as a bar that represents the duration of the output of the respective television program on channel 302, which in this instance is one hour. The content-progress indicator 336 includes an elapsed-time portion 342 which indicates a relative amount of time in the streaming of the television program that has elapsed in relation to the duration. The content-progress indicator 336 also includes a time-remaining portion 344 that indicates a relative amount of time that remains in the duration of the streaming of the television program. Likewise, content-progress indicators 338, 340 include respective elapsed time portions 346, 348 and respective time-remaining portions 350, 352. In this way, the content-progress indicators 336-340 supply a direct visual correlation to a viewer of the current output "position" in the duration of corresponding content.

In the EPG 300 of FIG. 3, each of the content-progress indicators 336-340 has a uniform size such that relevant progress of television programs may be compared, one to another. For example, the duration described by the content-progress indicator 336 of the first channel is one hour while the duration described by the content-progress indicator 338 of channel 304 is thirty minutes. Therefore, a viewer is able to judge that although 15 minutes have elapsed from the start time of the respective television programs of both channels 302, 304, that one quarter of the duration for the television program of channel 302 has elapsed as opposed to one half of the duration of the television program of channel 304 by viewing the respective content-progress indicators. In another implementation, each content-progress indicator may also be configured to describe differences in duration, such as through different relative sizes of respective content-progress indicators, and so on.

Although a plurality of content-progress indicators 336-340 are shown, the EPG 300 may also be configured to include a single content-progress indicator. For example, the content-progress indicator may correspond to a currently selected content item in the EPG 300. Additionally, although television programs that are streamed from a head end are described, one or more of the content-progress indicators 336-340 may also describe content that is stored in the storage device 220 of FIG. 2. For instance, the EPG 300 may show a program that is stored on a hard drive as an entries in the grid of the EPG 300, such as by giving locally recorded content items their own "channel". Therefore, the content-progress indicator may be displayed to show the user how much of each program has been viewed.

In this implementation, the content-progress indicators 336-340 are utilized to describe content that is available to the client 104 from a stream output by a content provider. The content-progress indicators may also be utilized to describe recordation of the content, further discussion of which may be found in relation to the following figure.

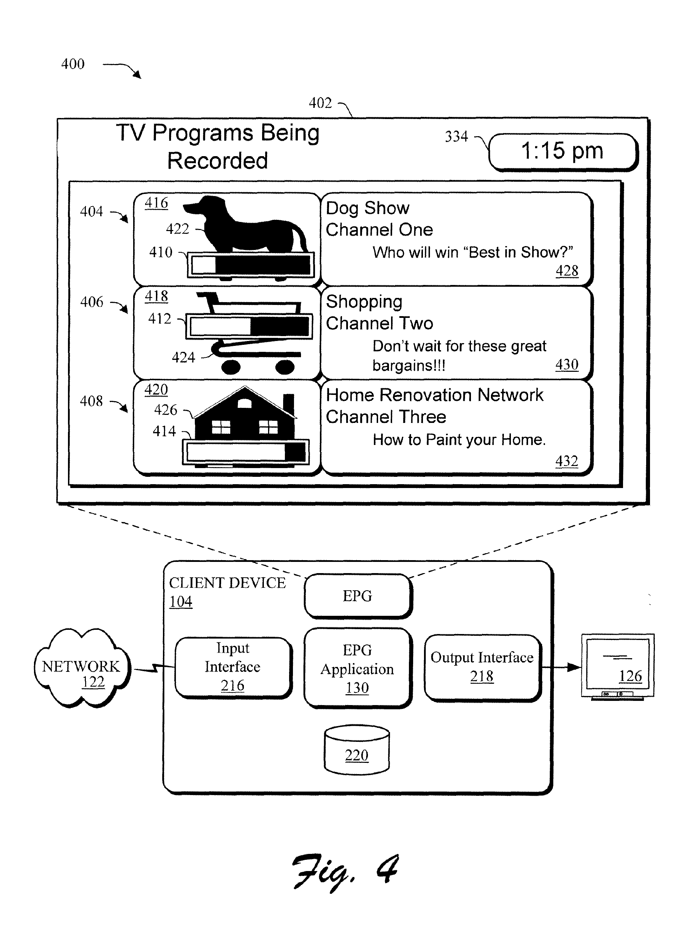

FIG. 4 is an illustration of a system 400 in an exemplary implementation showing an EPG 402 generated from EPG data which includes a plurality of content-progress indicators 404-408 that describes receipt and recordation of content by the client 104. As previously described, the client 104 may include digital video recorder (DVR) functionality by utilizing the storage device 220 to record content streamed over the network 122. The storage device 220 may be configured in a variety of ways, such as a hard disk drive, a removable computer-readable medium (e.g., a writable digital video disc), and so on. When recording content received from the network 122, the content-progress indicators 410, 412, 414 for the respective channels 404, 406, 408 may be utilized to indicate a current progress state of content recordation.

The EPG 402, for instance, may include segments 416, 418, 420 that include one or more frames taken from content on the respective channels 404, 406, 408. For example, channel 404 includes a segment 416 having an image of a dog 422 taken from a television program on the channel 404 of a dog show. Likewise, channel 406 includes a segment 418 having an image of a shopping cart 424 taken from a television program on channel 406 for home shopping, and channel 408 includes a segment 420 having an image of a home 426 taken from a television program on channel 408 for home renovation. Each of the television programs on the respective channels 404-408 in FIG. 4 is being recorded in the storage device 220 on the client 104 for later viewing.

Content-progress indicators 410-414 are illustrated as being overlaid over the images taken from respective content on the respective channels 404-408. The content-progress indicators 410-414 may be utilized to show the progress in the recording of the content from the respective channels 404-408. Content-progress indicator 410, for instance, indicates that one-quarter of the television program from the channel 404 has been received at the input interface 216 and recorded on the storage device 220. Content-progress indicator 412 indicates that one half of the television program from the channel 406 has been received and recorded on the storage device 220. Content-progress indicator 414 indicates that three quarters of the television program from the channel 408 has been received and recorded on the storage device 220. The content-progress indicators may also be utilized to describe output of recorded content from a storage device, further discussion of which may be found in relation to the following figure.

**FIG. 5** is an illustration of a system 500 in an exemplary implementation showing an EPG 502 generated from EPG data which includes a plurality of content-progress indicators 504-510 that describes output of recorded content at the client 104. As previously described, the client 104 may include a storage device 220 to record content streamed from a content provider. The client 104 may also output content stored on computer-readable media, such as digital video discs (DVDs). In this implementation, an EPG 502 is illustrated in which the client 104 outputs a plurality of content available locally on the client 104.

The EPG 502, for instance, may include first and second sections 504, 506 for display of respective content 508, 510. The first and second sections 504, 506 each include a respective content-progress indicator 512, 514 that describes a portion of the respective content that was stored by the client 104. For example, a viewer may have changed from viewing content recorded on a first channel corresponding to the first portion 504 to a second channel corresponding to the second portion 506. The client 104 automatically switched the recording of the respective channels in response to a switch in channels made by the viewer such that the viewer may "pause" the output of the output of the channels by using a pause buffer. The client 104, for example, may playback the content from the storage device 220, starting at the pause event, while continuing to record the currently-streamed content in the storage device.

The content-progress indicators 512, 514 may be configured to describe content that was recorded by the client 104 in the storage device 220. For example, content-progress indicator 512 indicates start and stop times 516, 518 as the beginning and ends of a display of a bar, thereby also indicating the duration of the streaming of the content. Content corresponding to the content-progress indicator 512 that was recorded during the duration is illustrated by a portion of the content-progress indicator illustrated as a block between arrows 520, 522. Thus, a viewer of the content-progress indicator may determine which portions of the content were recorded by the client 104.

Additionally, the content-progress indicators 512, 514 may be utilized by the viewer to select one of a plurality of the content 508, 510 being output for concurrent display on the display device 126. For example, the client 104 may output a plurality of streams of content from the storage device 220 and the user may select a desired one of the plurality of streams based on the respective content-progress indicators 512, 514. Thus, content-progress indicators may be utilized to describe portions of content recorded by the client 104, select one of a plurality of concurrently displayed content 508, 510, describe an amount of streamed content recorded by the client 104 as described in relation to FIG. 4, describe a point during the duration of an output of the content as described in relation to FIG. 3, and so on.

Although the content-progress indicators have been illustrated as bars in FIGS. 3, 4 and 5, the content-progress indicators may be configured in a variety of ways. For example, content-progress indicators may be configured as one or more graphs (e.g., a pie-chart) in which a first portion describes elapsed time and the remaining portion described time remaining. The first portion and the remaining portion form a segment that indicates the duration of the broadcast of the content. In another example, the content-progress indicator may be configured as an hourglass, with the "top" portion indicating time remaining and the "bottom" portion indicating elapsed time.

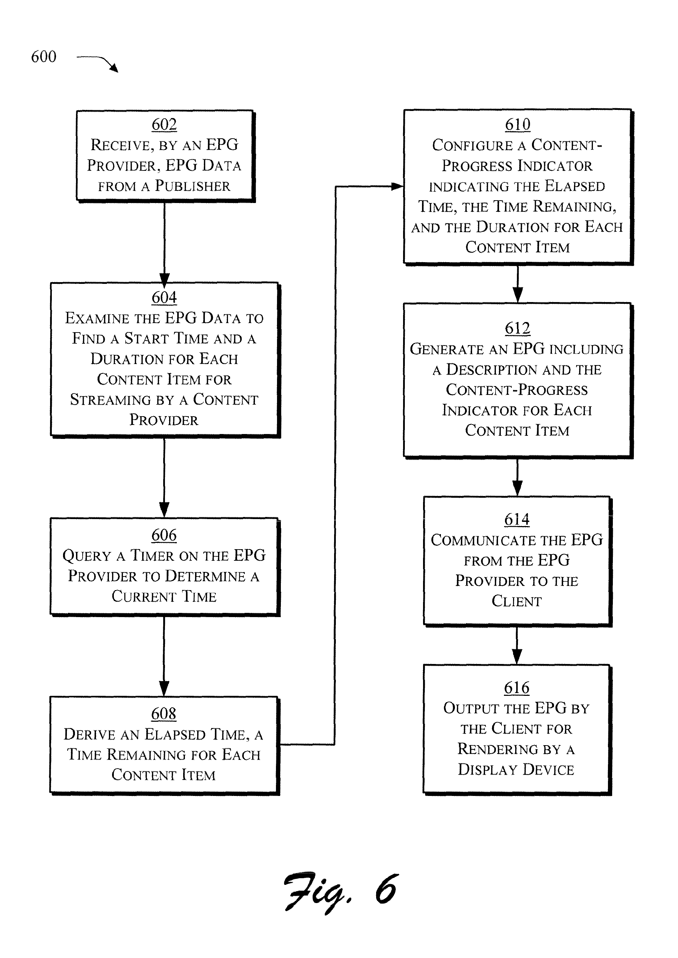

Furthermore, although each of the implementations described the generation of the EPG by an EPG application that is executed on the client, the EPG may be generated by an EPG application that is executed elsewhere in an environment, such as the EPG application 114 of the EPG server 112 in the environment 100 of FIG. 1. Further discussion of generation of an EPG is described in relation to FIG. 6.

### Exemplary Procedure

The following discussion describes EPGs that may be implemented utilizing the previously described systems and devices. Aspects of each procedure may be implemented in hardware, firmware, or software, or a combination thereof. The procedure is shown as a set of blocks that specify operations performed by one or more devices.

FIG. 6 is a flow chart depicting a procedure 600 in an exemplary implementation in which an EPG that describes a plurality of content items is generated by an EPG server and communicated to a client, in which the EPG includes a content-progress indicator for each content item. At block 602, an EPG provider receives EPG data from a publisher. At block 604, the EPG data is examined to find a start time and a duration for each content item for streaming by a content provider. For example, the content provider may stream content as a broadcast of television shows, pay-per-view movies, and so forth. The EPG data includes a plurality of characteristics that describe the content items, such as a title, a story line, a description, a production credit, a critic's opinion, a review, a recommendation, a duration, a start time, a stop time, an elapsed time in the streaming of the content, a time remaining in the streaming of the content, a genre, a rating, a performer, a director, and any combination thereof The EPG application of the EPG provider, when executed, locates the start time and the duration for each content item from the plurality of characteristics.

At block 606, the EPG provider queries a timer to determine a current time. For example, the current time may be relative to the start time found during the examination (block 604). At block 608, the EPG application is executed to derive an elapsed time and a time remaining for each content item. For example, the EPG application, when executed, may compute the elapsed time for each content item from the current time and the respective start time. The EPG application may also compute the time remaining based on the duration and the elapsed time. A variety of other techniques may also be utilized to compute the elapsed time and the time remaining.

At block 610, a content-progress indicator is configured to indicate the elapsed time, the time remaining, and the duration for each content item. For example, each content-progress indicator may include a segment that represents the duration of a respective content item. A portion of the segment may be utilized to indicate the elapsed time for the respective content time, while the remaining portion of the segment is utilized to indicate the time remaining to stream to the content. As previously described, the segment and portions may be configured in a variety of ways, such as a bar, a pie-chart, an hour glass, and so forth.

At block 612, an EPG is generated by the EPG provider that includes a description and the content-progress indicator for each content item. The description of the respective item may include one or more of the characteristics as previously described in relation to block 604, one or more frames of the content as shown in FIGS. 4 and 5, and so forth. At block 614, the EPG is communicated from the EPG provider to the client, such as over the Internet, broadcast using a carousel file system as described in relation to FIG. 7, and so forth. At block 616, the EPG is output by the client for rendering by a display device.

### Exemplary Environment

FIG. 7 illustrates an exemplary television entertainment system 700 that is an architecture in which generation of an EPG may be implemented. System 700 facilitates distribution of content, such as television programming, and EPG data to multiple viewers, and includes components to further facilitate EPG generation. The system 700 includes one or more content providers 702, one or more EPG providers 704, a content distribution system 706, and multiple clients 708(1), 708(2), ..., 708(N) coupled to the content distribution system 706 via a broadcast network 710. The clients 708(1)-708(N) and broadcast network 710 can either be the same as or different from the client 104 and network 122 shown in FIG. 1.

Content provider 702 includes a content server 712 and stored television programming, such as content 714. Content server 712 controls distribution of the stored content 714 from content provider 702 to the content distribution system 706. Additionally, content server 712 controls distribution of live content (e.g., content that was not previously stored, such as live feeds) and/or content stored at other locations to the content distribution system 706. EPG provider 704 includes an EPG database 716 and an EPG server 718. The EPG database 716 stores electronic files of EPG data which are used to generate an EPG. The EPG provider 704 may also obtain EPG data from other sources, such as the publisher 102 shown in FIG. 1. The EPG provider 704, EPG database 716 and EPG server 718 can either be the same as or different from the EPG provider 108, EPG database 110 and EPG server 112 shown in FIG. 1.

An electronic file maintains EPG data 720 that may include a program title 722, day(s) 724 to identify which days of the week the television program will be streamed, start time(s) 726 to identify a time that the television program will be streamed on the particular day or days of the week, and a category 728. A category, which may be considered a type of characteristic, describes the genre of a television program and categorizes it as a particular television program type. For example, a television program can be categorized as a movie, a comedy, a sporting event, a news program, a sitcom, a talk show, or as any number of other category descriptions. EPG data 720 may also include program ratings, characters, descriptions, protagonist's name, station identifiers, channel identifiers, and other schedule information. Additionally, EPG data 720 may include video-on-demand information, such as movie schedules, as well as application information, such as for interactive games, and other programming information that may be of interest to a viewer.

The EPG server 718 processes the EPG data 720 prior to distribution to generate a published version of the EPG data which can contain programming information for all broadcast channels and on-demand content listings for one or more days. The processing may involve any number of techniques to reduce, modify, or enhance the EPG data 720. Such processes might include selection of television programs, television program compression, format modification, and the like. The EPG server 718 controls distribution of the published version of the EPG data from EPG provider 704 to the content distribution system 706 using, for example, a file transfer protocol (FTP) over a TCP/IP network (e.g., Internet or Intranet). Further, the published version of the EPG data can be transmitted from EPG provider 704 via a satellite and the content distribution system 706 directly to a client 708.

Content distribution system 706 includes a broadcast transmitter 730, one or more content processing applications 732, and may contain one or more EPG data processing applications 734. Broadcast transmitter 730 broadcasts signals, such as cable television signals, across broadcast network 710. Broadcast network 710 can include a cable television network, RF, microwave, satellite, and/or data network, such as the Internet, and may also include wired or wireless media using any broadcast format or broadcast protocol. Additionally, broadcast network 710 can be any type of network, using any type of network topology and any network communication protocol, and can be represented or otherwise implemented as a combination of two or more networks.

A content processing application 732 processes the content received from content provider 702 prior to transmitting the content across broadcast network 710. Similarly, the EPG application 734 processes the EPG data received from EPG provider 704 prior to transmitting the EPG data across broadcast network 710. A particular content processing application 732 may encode, or otherwise process, the received content into a format that is understood by the multiple clients 708(1), 708(2), ..., 708(N) coupled to broadcast network 710. Although FIG. 7 shows a single content provider 702, a single EPG provider 704, and a single content distribution system 706, exemplary system 700 can include any number of content providers and/or EPG data providers coupled to any number of content distribution systems.

Content distribution system 706 is representative of a head end that provides EPG data, as well as content, to multiple subscribers. The content distribution system 706 in other embodiments may include the EPG server 718. Each content distribution system 706 may receive a slightly different version of the EPG data that takes into account different programming preferences and lineups. The EPG server 718 may create different versions of an EPG that includes those channels of relevance to respective head end services, and the content distribution system 706 transmits the EPG data to the multiple clients 708(1), 708(2), ..., 708(N). In one implementation, for example, content distribution system 706 utilizes a carousel file system to repeatedly broadcast the EPG data over an out-of-band (OOB) channel to the clients 708. Alternatively, the multiple clients 708(1), 708(2), ..., 708(N) can receive standard, or uniform, EPG data and individually determine the EPG data to display based on the associated head end service.

Clients 708 can be implemented in a number of ways. For example, a client 708(1) receives content broadcast from a satellite-based transmitter via a satellite dish 736. Client 708(1) is also referred to as a set-top box or a satellite receiving device. Client 708(1) is coupled to a television 738(1) for presenting the content received by the client (e.g., audio data and video data), as well as a graphical user interface. A particular client 708 can be coupled to any number of televisions 738 and/or similar devices that can be implemented to display or otherwise render content. Similarly, any number of clients 708 can be coupled to a single television 738.

Client 708(2) is also coupled to receive content broadcast from broadcast network 710 and provide the received content to associated television 738(2). Client 708(N) is an example of a combination television 740 and integrated set-top box 742. In this example, the various components and functionality of the set-top box are integrated into the television, rather than using two separate devices. The set-top box integrated into the television can receive broadcast signals via a satellite dish (similar to satellite dish 736) and/or via broadcast network 710. In alternate implementations, clients 708 may receive broadcast content via the Internet or any other broadcast medium, such as back channel 744 which can be implemented as an Internet protocol (IP) connection or as other protocol connections using a modem connection and conventional telephone line, for example. Further, back channel 744 provides an alternate communication link between each of the clients 708, and between the clients 708 and the content distribution system 706.

The exemplary system 700 also includes stored on-demand content 744, such as Video On-Demand (VOD) movie content. The stored on-demand content can be viewed with a television 738 via a client 708 through an onscreen EPG, for example, and a viewer can enter instructions to stream a particular movie, or other stored content, to a corresponding client 708.

### Exemplary EPG Data System

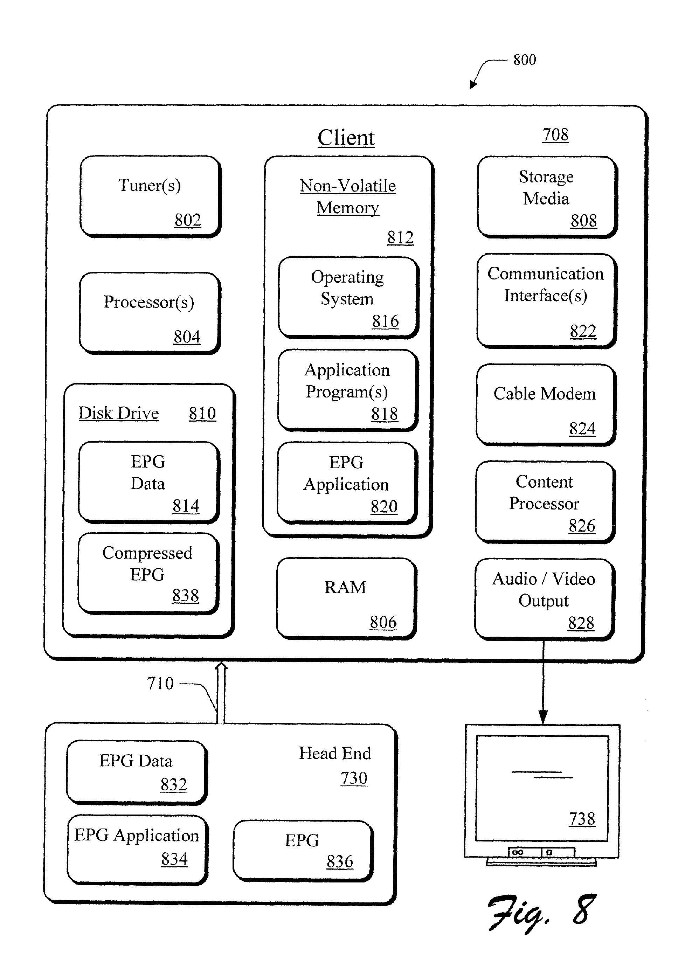

FIG. 8 illustrates an exemplary EPG data system 800 that includes selected components of television system 700, such as an exemplary client 708 and a television 738. Client 708 includes components to generate and output the EPG in a television-based entertainment and information system. Client 708 can be implemented as a set-top box, a satellite receiver, a TV recorder with a hard disk, a digital video recorder (DVR) and playback system, a game console, an information appliance, and as any number of similar embodiments.

Client 708 includes one or more tuners 802 which are representative of one or more in-band tuners that tune to various frequencies or channels to receive television signals, as well as an out-of-band tuner that tunes to the broadcast channel over which the EPG data is broadcast to client 708. The tuners 802 may or may not correspond to the input interface 216 of FIG. 2. Client 708 also includes one or more processors 804 (e.g., microprocessors) which process various instructions to control the operation of client 708 and to communicate with other electronic and computing devices.

Client 708 can be implemented with one or more memory components, examples of which include a random access memory (RAM) 806, mass storage media 808, a disk drive 810, and a non-volatile memory 812 (e.g., ROM, Flash, EPROM, EEPROM, etc.). The memory components (e.g., RAM 806, storage media 808, disk drive 810, and non-volatile memory 812) store various information and/or data such as received content, EPG data 814, configuration information for client 708, and/or graphical user interface information.

Alternative implementations of client 708 can include a range of processing and memory capabilities, and may include any number and different memory components than those illustrated in FIG. 8. For example, full-resource clients can be implemented with substantial memory and processing resources, including the disk drive 810. Low-resource clients, however, may have limited processing and memory capabilities, such as a limited amount of RAM 806 and limited processing capabilities of a processor 804.

An operating system 816 and one or more application programs 818 can be stored in non-volatile memory 812 and executed on a processor 804 to provide a runtime environment. A runtime environment facilitates extensibility of client 708 by allowing various interfaces to be defined that, in tum, allow application programs 818 to interact with client 708. The application programs 818 that may be implemented in client 708 can include a browser to browse the Web (e.g., "World Wide Web"), an email program to facilitate electronic mail, and so on.

An EPG application 820 is stored in memory 812 to process the EPG data 814 and generate an EPG. The EPG application 820 utilizes the EPG data 814 and enables a television viewer to navigate through an onscreen EPG and locate television shows, video on-demand movies, interactive game selections, and other media access information of interest to the viewer. With the EPG application 820, the television viewer can look at schedules of current and future programming, set reminders for upcoming programs, and/or enter instructions to record one or more television shows or video on-demand movies.

Client 708 further includes one or more communication interfaces 822 and a PSTN, DSL, or cable modem 824. A communication interface 822 can be implemented as a serial and/or parallel interface, as a wireless interface, and/or as any other type of network interface. A wireless interface enables client 708 to receive input commands and other information from a user-operated input device, such as from a remote control device or from another infrared (IR), 802.11, Bluetooth, or similar RF input device. Input devices can include a wireless keyboard or another handheld input device such as a personal digital assistant (PDA), handheld computer, wireless phone, or the like. A network interface and a serial and/or parallel interface enables client 708 to interact and communicate with other electronic and computing devices via various communication links. Modem 824 facilitates client 708 communication with other electronic and computing devices via a conventional telephone line, a DSL connection, or a cable modem.

Client 708 also includes a content processor and/or decoder 826 to process and decode broadcast video signals, such as NTSC, PAL, SECAM, or other television system analog video signals, as well as a DVB, ATSC, or other television system digital video signals. Content processor 826 can also include a video decoder and/or additional processors to receive, decode, and/or process video content received from content distribution system 706 (FIG. 7) which is representative of a head end service that provides EPG data, as well as content, to multiple clients 708. Content processor 826 can include an MPEG-2 or MPEG-4 (Moving Pictures Experts Group) decoder that decodes MPEG-encoded video content. MPEG supports a variety of audio/video formats, including legacy TV, HDTV (high-definition television), DVD (digital versatile disc), and five-channel surround sound.

Typically, video content includes video data and audio data that corresponds to the video data. Content processor 826 generates video and/or display content that is formatted for display on display device 738, and generates decoded audio data that is formatted for output by an audio device, such as one or more speakers (not shown) in display device 738. Content processor 826 can include a display controller (not shown) that processes the video and/or display content to display corresponding images on display device 738. A display controller can include a microcontroller, integrated circuit, and/or similar video processing component to process the images. Client 708 also includes an audio and/or video output 828 that provides the video and/or display signals to television 738 or to other devices that process and/or display, or otherwise render, the audio and video data. It is to be noted that the systems and methods described herein can be implemented for any type of encoding format as well as for data and/or content streams that are not encoded.

Although shown separately, some of the components of client 708 may be implemented in an application specific integrated circuit (ASIC). Additionally, a system bus (not shown) typically connects the various components within client 708. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

The exemplary EPG data compression system 800 also includes a head end 830 as an implementation of content distribution system 706 (FIG. 7) which is representative of a head end that provides EPG data 832, as well as content, to client 708. Head end 830 includes an EPG application 834 (e.g., an EPG data processing application 734 as shown in FIG. 7) implemented to process EPG data 832 as well as implement the EPG data compression procedures described herein. For example, the EPG application 834, when executed, may generate a communicate an EPG 836 to the client 708 over the network 730.

The EPG application 834 can be implemented as a software component that executes on a processor and is stored in a non-volatile memory device in head end 830. Although EPG application 834 is illustrated and described as a single application configured to perform several functions of EPG data compression, the EPG application 834 can be implemented as several component applications distributed to each perform one or more functions in a computing device, a digital video recorder system, a personal video recorder system, and/or any other television-based entertainment and information system.

The EPG application 834 generates the EPG 836, including identifiers and values found in the EPG data 832, as described in relation to FIG. 6. The EPG 836 may be generated by the head end 830 with the EPG application 834 when the head end generates the EPG data for an arbitrary time period and compresses the EPG data for communication to the client 708 via broadcast network 710. Client 708 may receive the EPG 836 from the head end 830 in a compressed format as compressed EPG 838 and store the compressed EPG 838 in the disk drive 810. Although this example describes compressing the EPG 836 before transmitting to reduce transmission bandwidth, client 708 may also receive the EPG 836 in an uncompressed format, and then compress the EPG 836 as compressed EPG 838 to reduce the memory storage space needed to maintain, or otherwise store, the EPG 836.

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A user interface (UI) for output by a client and for display by a display device, the UI comprising:
a plurality of representations of content items, wherein:
each said representation is selectable by a user to navigate to a corresponding said content item; and
each said content item has a duration when streamed for output by the client; and
at least one pictorial representation that:
corresponds to a respective said content item; and
indicates a time remaining in the duration of the respective said content item.

2. The UI as recited in claim 1, wherein one or more said content items are stored in a storage device on the client.

3. The UI as recited in claim 1, wherein one or more said content items are streamed from a head end.

4. The UI as recited in claim 1, wherein:
one said content item is stored in a stored device on the client;
another said content item is streamed from a head end to the client.

5. The UI as recited in claim 1, wherein:
the pictorial representation is displayable as a segment indicating the duration; and
the segment has a portion indicating an elapsed time and a portion indicating a time remaining in the output of the content.

6. The UI as recited in claim 1, wherein:
each said representation includes one or more frames of the respective said content item; and
the pictorial representation is for display over the one or more frames.

7. The UI as recited in claim 1, wherein the pictorial representation is for display adjacent to the corresponding said representation.

8. The UI as recited in claim 1, wherein one or more said content items is a television program.

9. A set-top box comprising an EPG application having computer-executable instructions that, when executed, output the UI as described in claim 1.

10. One or more computer-readable media comprising computer-executable instructions that, when executed on a computer, direct the computer to generate an EPG for output that describes a plurality of content items, wherein:
the EPG includes a representation for each said content item; and
at least one said representation has a corresponding pictorial representation that indicates elapsed time and time remaining in a stream, when output, of a respective said content item relative to a duration of the stream.

11. The one or more computer-readable media as described in claim 10, wherein the pictorial representation is displayable as a segment that indicates the duration, the segment having a portion indicating the elapsed time and a remaining portion indicating the time remaining.

12. The one or more computer-readable media as described in claim 10, wherein the representation is selectable by a user to navigate to a corresponding said content item.

13. The one or more computer-readable media as described in claim 10, wherein:
the representation includes one or more frames of the content; and
the pictorial representation is for display over the one or more frames.

14. The one or more computer-readable media as described in claim 10, wherein the pictorial representation is for display adjacent to the representation.

15. The one or more computer-readable media as described in claim 10, wherein one or more said content items is a television program.

16. A method comprising generating:
an electronic program guide (EPG) from data describing a plurality of content items for streaming from a head end to a client; and
from the EPG:
a display of a described of each said content item; and
a pictorial representation of a current progress state in the streaming of each said content item from the head end.

17. The method as described in claim 16, wherein the current progress state is elapsed time and time remaining in the streaming of the content item relative to duration in the streaming of the content item.

18. The method as described in claim 16, wherein:
the pictorial representation is displayable as a segment indicating the duration of the streaming; and
the segment has a portion indicating an elapsed time in the streaming and a portion indicating a time remaining in the streaming.

19. The method as described in claim 16, wherein:
the pictorial representation is displayable as a bar indicating the duration of the streaming; and
the bar has a first portion indicating an elapsed time in the streaming and a second portion indicating a time remaining in the streaming.

20. The method as described in claim 16, wherein the description is selectable by a user to navigate to corresponding said content item.

21. The method as described in claim 16, wherein:
the description includes one or more frames of the content item; and
the pictorial representation is for display over the one or more frames.

22. The method as described in claim 16, wherein the pictorial representation is for display adjacent to the description.

23. The method as described in claim 16, wherein the plurality of content items includes a television program.

24. The method as described in claim 16, wherein EPG is further configured to display one or more characteristics of the plurality of content items selected from the group consisting of:
a title;
a story line;
a textual description;
a production credit;
a critic's opinion;
a review;
a recommendation;
a duration;
a start time;
a stop time;
an elapsed time in the output of the content;
a time remaining in the output of the content;
a genre;
a rating;
a performer;
a director; and
any combination thereof.

25. The method as described in claim 16, wherein the generating further comprises:
determining a start time and a duration of the streaming from the EPG data;
querying a timer to determine a current time; and
configuring the pictorial representation based on the start time, the duration, and the current time.

26. The method as described in claim 16, wherein:
the content is received at a client from the head end; and
the pictorial representation indicates the current progress state in recordation of the plurality of content at the client.

27. The method as described in claim 16, wherein:
the generating is performed at the head-end; and
the method further comprises communicating the EPG from the head-end to a client.

28. The method as described in claim 16, wherein the generating is performed by a client.

29. One or more computer-readable media comprising computer-executable instructions that, when executed, perform the method as recited in claim 16.

30. A method comprising:
receiving a plurality of content items described in an electronic program guide (EPG) and available for streaming from a head end to a client; and
generating a pictorial representation quantifying a current progress available for streaming of at least one said content item from the head end.

31. The method as described in claim 30, wherein the pictorial representation quantifies how much of the at least one said content item has and has not been streamed from the head end.

32. The method as described in claim 30, wherein:
at least one said content item is a TV program for playback at the client; and
the pictorial representation quantifies a time remaining for display of the TV program.

33. One or more computer-readable media comprising computer-executable instructions that, when executed, perform the method as recited in claim 30.

34. A client comprising:
an input interface for receiving one or more of a plurality of content items;
an output interface for providing an output to a display device;
a processor; and
memory configured to maintain an EPG for output at the output interface, wherein the EPG includes at least one content-progress indicator that:
corresponds to a respective one of a plurality of content items, wherein each said content item has a duration when streamed for output at the output interface; and
is displayable as a pictorial representation indicating elapsed time and time remaining in the stream of the respective one said content item relative to duration of the stream of the respective one said content item.

35. The client as described in claim 34, wherein the memory is further configured to maintain the content.

36. The client as described in claim 34, wherein:
the content item is broadcast; and
the input interface is a tuner for receiving the broadcast content item over the network and the EPG from a carousel file system.

37. The client as described in claim 34, wherein the network is an Internet.

38. The client as described in claim 34, wherein the pictorial representation is displayable as a segment representing the duration, the segment having a portion indicating the elapsed time and a portion indicating the time remaining.

39. An apparatus comprising:
means for generating an electronic program guide (EPG) from data describing a plurality of content items, the EPG including a description of each said content item; and
means for generating a pictorial quantification of a remainder of at least one said content item that is available for streaming from a head end to the client.
